# EUROPEAN PATENT SPECIFICATION

(11) **EP 4 435 500 B1**
(45) Date of publication and mention of the grant of the patent: **16.09.2026**
(21) Application number: 21964789.8
(22) Date of filing: 19.11.2021
(51) Int. Cl.: G02F 1/015

(54) **DRIVER INTEGRATED IQ OPTICAL MODULATOR**
IN DEN TREIBER INTEGRIERTER OPTISCHER IQ-MODULATOR
MODULATEUR OPTIQUE IQ INTÉGRÉ À UN PILOTE

(43) Date of publication of application: 25.09.2024
(73) Proprietor: NTT, Inc., Tokyo 100-8116 (JP)
(72) Inventor: OZAKI, Josuke, Musashino-shi, Tokyo 180-8585 (JP); OGISO, Yoshihiro, Musashino-shi, Tokyo 180-8585 (JP)
(74) Representative: TBK
(86) International application number: PCT/JP2021/042615
(87) International publication number: WO 2023/089774

(56) References cited:
- WO-A1-2018/174083
- JP-A- 2005 128 440
- JP-A- 2016 029 469
- JP-A- 2016 029 469
- JP-A- 2018 189 699
- JP-A- 2018 189 699
- JP-A- 2019 200 389
- JP-U- H0 470 742
- US-A1- 2013 163 913
- US-A1- 2020 026 145
- US-A1- 2020 201 135

## Description

### [Technical Field]

The present disclosure relates to an ultra-high-speed IQ optical modulator which IQ-modulates an optical signal using an electrical signal.

### [Background Art]

High-speed optical modulators compatible with advanced optical modulation schemes are required to meet the increasing demand for communication traffic. Particularly, multilevel optical modulators using a digital coherent technique play a major role in the realization of large-capacity transceivers exceeding 100 Gbps. In these multilevel optical modulators, in order to add independent signals to the amplitude and phase of light, Mach-Zehnder interferometer (MZ) interferometric type zero-chirp driven Mach-Zehnder modulators (MZM) are built in parallel multiple stages.

Two polarization multiplexed IQ optical modulators, which are becoming popular in communication networks, are installed in parallel so that the so-called nested structure MZ optical waveguides, in which each arm waveguide of the parent MZM is composed of child MZMs, correspond to the X and Y polarization channels and each of the polarization multiplexed IQ optical modulators is composed of MZMs (Quad-parallel MZMs) having a total of four child MZMs. Two arms of each child MZM include traveling wave electrodes to which radio frequency (RF) modulated electrical signals for modulating optical signals propagating in the optical waveguide are input. In each polarization channel, one of the two such pairs of child MZMs corresponds to the I channel and the other corresponds to the Q channel.

A polarization multiplexed IQ optical modulator produces an electro-optic effect to phase-modulate two optical signals propagating in an optical waveguide of a child MZM by inputting an RF modulated electrical signal to one end of the modulation electrode provided along the arm waveguide of the child MZM. (PTL 2)

Also, although a polarization multiplexed IQ optical modulator is one of the IQ optical modulators, the optical signals used as the IQ optical modulator are not limited to two polarized optical signals and may be one using a single polarized optical signal is also known. For single polarization, one nested MZM is constructed.

In addition, in recent years, miniaturization of optical transmitter modules and reduction of driving voltage have become issues and research and development of semiconductor MZ modulators which can be reduced in size and driving voltage is being vigorously pursued. Furthermore, in the research and development of semiconductor MZ modulators, there is an accelerating trend toward high baud rates such as 64 GBaud and 100 GBaud, and there is a demand for broadband optical modulators.

With respect to this, in addition to improving the characteristics of the IQ modulator alone, research and development of high bandwidth coherent driver modulators (HB-CDM) which aim to integrate a driver IC and IQ modulator in one package and to improve high-frequency characteristics and achieve miniaturization by co-designing the driver IC and IQ modulator is accelerating. (NPL 1)

In this configuration, since the modulator is integrated with a differential drive driver, it is desirable that the modulator itself also have a configuration based on differential drive.

In the configuration of an HB-CDM, the driver and modulator are integrated. Thus, the design of not only the modulator but also the driver is very important. Particularly, an HB-CDM uses an open-collector type (or open-drain type) driver to reduce power consumption. (NPL 1, NPL 2)

For this reason, as a layout on the IQ modulator to realize such high-speed operation, differential capacitance loading traveling wave type electrode structures based on differential high-frequency lines such as GSSG and GSGSG (G: Ground, S: Signal) are used. (PTL 1)

It can be said that configurations such as GSSG and GSGSG have a Ground (GND) line located near the signal line, which is a very desirable configuration as a differential line configuration and the most desirable configuration from the viewpoint of minimizing crosstalk between channels.

However, on the other hand, it is necessary to arrange a plurality of Ground metals as GND lines. In addition, in order for Ground to work effectively and obtain a sufficient crosstalk minimization effect, a GND line pattern (GND pattern) that is wider than the signal line is required.

Furthermore, if the GND pattern is between channels, it will be impossible to place the metal patterns that make up lines other than the GND line. In addition, since it is a differential line, there is a problem that it is necessary to arrange Ground symmetrically with respect to the signal line, the wiring layout on the IQ modulator becomes very limited if a differential line configuration including Ground such as GSSG or GSGSG is used, or a size of the IQ modulator itself also becomes large.

From the above point of view, in order to miniaturize/integrate the semiconductor IQ modulator, it is preferable that the differential high-frequency line have an SS line configuration composed only of a signal line without a Ground. Since this SS line configuration has no Ground, the degree of layout freedom is very high.

On the other hand, considering the configuration of an HB-CDM, the differential driver IC installed inside the HB-CDM is generally an interface of GSSG or GSGSG configuration. When an object to be connected to such a driver IC is an IQ modulator with an SS line layout, a certain Ground cannot be connected to the driver IC side and only the signal is connected. Thus, there is a problem of the high-frequency characteristics deteriorating at the connection with the driver IC.

### [Citation List]

### [Patent Literature]

[PTL 1] Japanese Patent Application Publication No. 2019-194722
[PTL 2] WO 2018/174083

### [Non Patent Literature]

[NPL 1] J. Ozaki, et al., "Ultra-low Power Dissipation (<2.4 W) Coherent InP Modulator Module with CMOS Driver IC", Mo3C.2, ECOC, 2018
[NPL 2] N. Wolf, et al., "Electro-Optical Co-Design to Minimize Power Consumption of a 32 GBd Optical IQ-Transmitter Using InP MZ-Modulators", CSICS, 2015

Further prior art documents are US 2020/026145 A1 showing an IQ optical modulator, JP 2018 189699 A showing an optical transmitter and JP 2016 029469 A showing a semiconductor optical modulator and manufacturing method of semiconductor optical modulator.

### [Summary of Invention]

Generally, from the viewpoint of crosstalk, although the high-frequency line has a differential line configuration of GSSG and GSGSG, with the above configuration, there is a problem that the size of the IQ modulator becomes large to secure the Ground area for ensuring symmetry.

The present disclosure was made in view of such problems and changes a differential line configuration to an SS line without deterioration of crosstalk characteristics, performs miniaturization/integration of IQ modulators configured using semiconductors, and realizes efficient and good high-frequency connection with differential drivers.

To achieve such an object, an embodiment of the invention provides a driver integrated IQ optical modulator according to claim 1.

As explained above, according to an embodiment of the present disclosure, in a driver integrated IQ modulator in which an SS line configuration-based IQ modulator and a driver IC are connected, a smooth connection with the driver IC can be realized while downsizing the IQ modulator. It is possible to improve the high-frequency characteristics in a simple SS line configuration.

### [Brief Description of Drawings]

[Fig. 1] Fig. 1 is a schematic diagram of a layout of an IQ modulator.
[Fig. 2] Fig. 2 is a schematic diagram of a layout of an IQ modulator according to an embodiment of the present disclosure.
[Fig. 3] Fig. 3 is a diagram for explaining connection between the driver IC and the IQ modulator, (a) is a schematic view of a wire when a connecting portion is viewed from above, (b) is a schematic diagram of the wire viewed from a side of the connecting portion, and (c) is a diagram showing an outline of a cross-sectional structure of a PAD portion of the IQ modulator.

### [Description of Embodiments]

A driver integrated IQ optical modulator according to an embodiment of the present disclosure will be described below with reference to the drawings. The same or similar reference numerals indicate the same or similar elements and repeated descriptions may be omitted. The driver integrated IQ optical modulator which will be described below is a device in which a differential driver IC and an IQ modulator are integrated in one package. A driver integrated IQ optical modulator of the present disclosure includes an IQ modulator and a differential driver IC connected to the IQ modulator. The IQ modulator includes at least two or more Mach-Zehnder modulators. Each of the Mach-Zehnder modulators includes a differential transmission line. A differential waveguide includes two signal lines for transmitting a high-frequency modulated signal including a differential signal.

In the explanation of a plurality of lines which constitute a RF traveling wave type electrode through which a radio frequency (RF) modulation signal including a differential signal propagates, high-frequency modulated signals are sometimes denoted as Signal or S, and ground potentials as Ground, GND, or G.

In the driver integrated IQ optical modulator of the present disclosure, the differential transmission line includes a PAD portion for connection with other elements, a lead line portion, a phase modulation portion, and a termination resistor. Other elements may include differential driver ICs. A PAD portion includes a set of four metal PADs with a GSSG configuration or a set of five metal PADs with a GSGSG configuration.

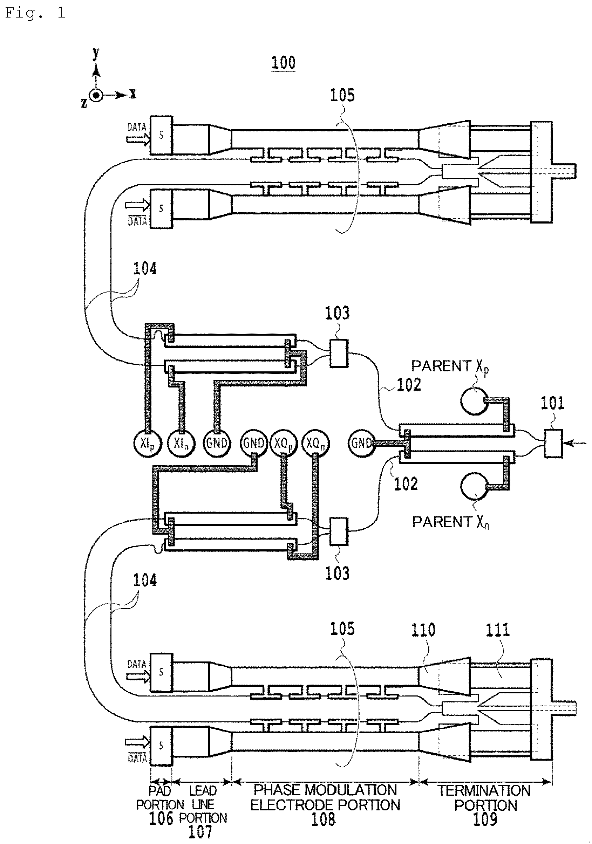

Fig. 1 is a diagram showing a schematic layout of an IQ modulator 100 having an SS line configuration including two signal lines. The IQ modulator 100 shown in Fig. 1 has a so-called nested structure MZ optical waveguide in which each arm of a parent MZM is composed of child MZMs. If two IQ modulators 100 shown in Fig. 1 are used in parallel to correspond to the X polarization channel and the Y polarization channel, MZMs (Quad-parallel MZMs) having a total of four child MZMs can be configured. The IQ modulator 100 of Fig. 1 is shown as that corresponding to the X polarization channel. Light input to the IQ modulator 100 from an x-axis direction in a center of Fig. 1 is branched into two parent arm waveguides 102 in the demultiplexer 101 constituting the parent MZM. Each of the two parent arm waveguides is composed of a child MZM. The child MZM has a demultiplexer 103 which splits the input light into two arm waveguides 104.

Two arm waveguides 104 of each child MZM include traveling wave electrodes 105 to which RF modulation signals for modulating optical signals propagating in the optical waveguides are input.

As shown in Fig. 1, a traveling wave electrode 105 has a PAD portion 106, a lead portion 107, a phase modulation electrode portion 108, and a termination portion 109. It is composed of a pair of two S lines. That is to say, the PAD portion 106, the lead portion 107, the phase modulation electrode portion 108, and the termination portion 109 have the SS line configuration.

The termination portion 109 is formed by linearly disposing a tapered connection pad 110 followed by a terminal resistor 111 composed of a rectangular resistor. Note that the layout of the IQ modulator 100 shown in Fig. 1 simply shows only the periphery of the traveling wave electrode 105 and the multiplexer such as an MMI (not shown) to which the two arm waveguides 104 of the child MZM are connected under the termination portion 109 (not shown) and other multiplexers are disposed.

The IQ modulator 100 shown in Fig. 1 is adapted to allow phase adjustment electrodes to be placed in the region between the two child Mach-Zehnder modulators by configuring the traveling wave electrode 105 as an SS line configuration which does not include the Ground line and thus the size reduction and integration of the IQ modulator 100 are realized. If the overall configuration of traveling wave electrode 105 is a GSSG configuration or a GSGSG configuration including two S lines and two or three G lines, it becomes impossible to dispose the phase adjustment electrode between the two child Mach-Zehnder modulators or an additional region for disposing the G line is required, which leads to an increase in the size of the IQ modulator 100.

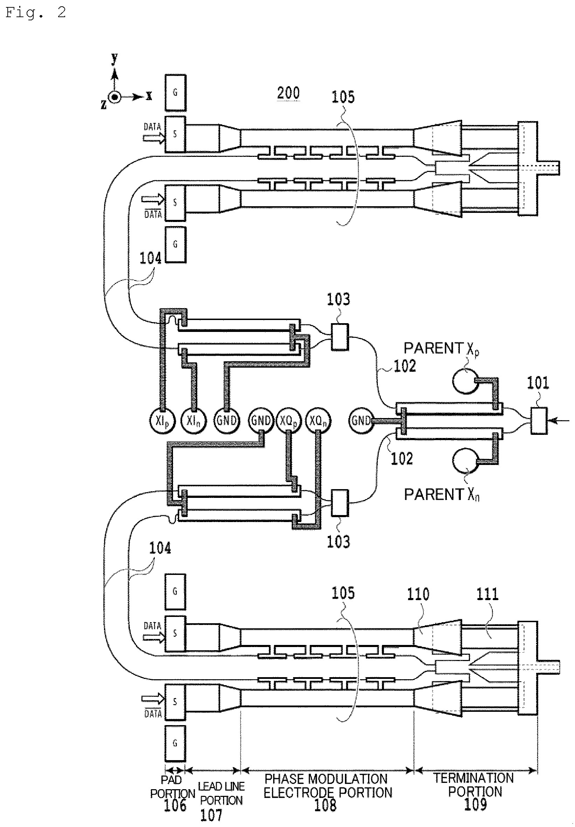

Fig. 2 is a schematic diagram showing a layout of the IQ modulator 200 of the present disclosure. As shown in Fig. 2, the configuration is the same as the conventional configuration shown in Fig. 1 except for the PAD portion 106 of the traveling wave electrode. Only the PAD portion 106 which is most important from the viewpoint of connection of high-frequency characteristics with a driver IC (not shown) has a GSSG configuration (four metal PADs). If the size of the GND metal PAD (that is, GND PAD) of the PAD portion 106 is too large, the size of IQ modulator 200 will be increased. Thus, it is preferable to make it about the size in which one general ball wire can be struck. For this reason, the size of the GND PAD does not necessarily need to be the same size as the Signal PAD. It can be said that the smaller the size of the GND PAD than the size of the Signal PAD, the smaller the size of the IQ modulator 200 and the better the pattern design. With respect to the GND PAD, if one wire can be connected, there is no problem in terms of high-frequency characteristics.

Although a GSSG-configured PAD portion is shown in the example shown in Fig. 2, another GND PAD may be provided between two Signal PADs to form a GSGSG-configured PAD portion. In this case, it is necessary to place another GND PAD avoiding the upper portion of arm waveguide 104. This is because, if there is a PAD on the arm waveguide 104, the waveguide may be damaged when wires are connected by wire bonding. Naturally, it is preferable to avoid the upper portion of the waveguide when disposing the GND PAD of the GSSG configuration.

The phase modulation electrodes in the phase modulation electrode portions of the two child Mach-Zehnder modulators in the IQ modulator 200 shown in Fig. 2 are electrodes with a capacitance loading structure. This configuration is well known as a low-loss RF line configuration which can be designed to achieve both impedance matching and speed matching and is very useful as a layout for modulators operating at high speed.

Furthermore, the impedance of the phase modulation electrode portion in the IQ modulator 200 is 3% or more higher than the impedance of the terminal resistor 111 of the termination portion 109 (the impedance of the terminal resistor 111 of the termination portion 109 is lower). This is because, when connected to the driver IC, if the impedance of the termination portion 109 is higher than the impedance of the phase modulation electrode portion, the frequency characteristics will become depressed in the low-frequency portion. If the above design rule can be observed, it is possible to minimize the drop in the frequency characteristics in the low-frequency portion and to realize flat frequency characteristics in the vicinity of the low frequencies.

Considering the high-frequency characteristics, it is preferable that the inductivity (L property) of the wire and the capacitance (C property) of the Signal PAD be small. For this reason, in order to realize a broadband IQ modulator, it is necessary to reduce the wire inductance and the Signal PAD capacitance. It is preferable that the Signal PAD portion be not formed directly on the semiconductor substrate, for example, but be provided on a low dielectric material such as BCB provided on the semiconductor substrate. Thus, it is possible to separate the PAD from the semiconductor substrate, which causes a high dielectric constant and an increase in capacitance and to realize a low-capacity PAD. Furthermore, in order to reduce the capacitance, it is considered desirable to reduce the size of the Signal PAD. Here, if the Signal PAD size is too small, only one ball wire can be connected. Although the C property of the Signal PAD has decreased, the L property of the wire has increased, resulting in deterioration of the high-frequency characteristics. For this reason, it is preferable that the Signal PAD be configured so that the ball wires are connected so that there are two different wire paths when viewed from above. Of course, if the wires are connected in three different paths when viewed from the top, the L property can be further reduced, whereas the C property of the Signal PAD increases, leading to characteristic deterioration.

As described above, in order to further improve the characteristics, it is optimal to connect the wires so that there are up to two different wire paths when viewed from the top. Here, in addition, it is effective to stack wires in the vertical direction (z-axis direction) and connect them to the Signal PAD. That is to say, one Signal PAD with four wires having different paths can be connected by connecting the wires to the Signal PAD so that there are two different wire paths when viewed from the top and two different wire paths when viewed from the side. Thus, the L property of the wire can be greatly reduced, and the high-frequency characteristics can be greatly improved.

Furthermore, considering the installation surface, if the wire is pulled up from the IQ modulator 200 side toward the driver IC side, it is preferable to install the driver IC above the IQ modulator so that the wire length can be minimized.

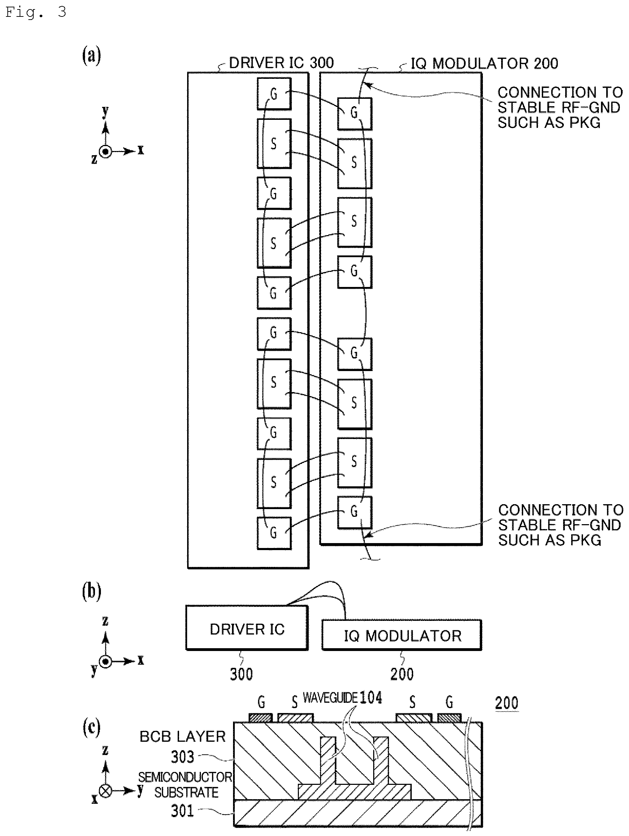

Furthermore, the IQ modulator 200 of the present disclosure has an SS line configuration or the traveling wave electrode 105 to which the RF-modulated electrical signal is input does not have a predetermined RF-GND (for example, not connected to ground potential of 0 volts). For this reason, it is preferable to supply RF-GND from the outside by connecting the metal PAD associated with GND among the metal PADs of the GSSG configuration or the GSGSG configuration to the external ground potential. For this purpose, wire bonding as shown in Fig. 3(a) is effective. Specifically, a region between all GND is covered with a loop wire to cover the Signal PAD (for example, the wire connecting the Signal PAD is surrounded by a loop wire) and only the GND PAD on the outermost periphery (for example, closest to the periphery of the IQ optical modulator) is connected to the RF-GND inside the stable package outside the IQ modulator 200. Since the Signal PAD is covered with the wire connecting the GND PAD in this way, it is also very useful for suppressing crosstalk. Similarly, on the driver IC side, providing a looped wire connecting the GND PADs to cover the Signal PADs leads to further suppression of crosstalk characteristics.

Fig. 3(a) is a diagram schematically showing wires when a connecting portion between the driver IC 300 and the IQ modulator 200 is viewed from above. Fig. 3(a) schematically shows only the driver IC 300 and the PAD portion of the IQ modulator 200. As an example, although the driver IC 300 includes PADs of GSGSG configuration and the IQ modulator 200 includes PADs of GSSG configuration, for example, the driver IC 300 may include PADs of GSSG configuration. Here, if the driver IC 300 has a GSSG-configured PAD, it is not preferable to use the GSGSG-configured PAD of the IQ modulator 200. This is because providing the GND PAD unnecessarily in the center increases the size of the IQ modulator 200 and demerits the layout of the IQ modulator 200. On the other hand, if the PAD of the driver IC 300 has the GSGSG configuration, even if the central GND PAD is not connected, there is no problem because it does not significantly affect the characteristics in terms of high-frequency connection.

As shown in Fig. 3(a), the metal PAD of the GSGSG configuration of the driver IC is connected to the GSSG configuration metal PAD of the corresponding modulator by a wire. Also, the GND PADs of the GSGSG configuration of the driver IC are connected by wires and the GND PADs of the GSSG configuration of the modulator are connected by wires. A wire connecting the Signal PAD of the GSGSG configuration of the driver IC and the Signal PAD of the GSSG configuration of the modulator is surrounded by a loop formed by the connection wire between the GND PADs.

A set of four wires is used for connecting one Signal PAD of the GSGSG configuration of the driver IC 300 and one Signal PAD of the GSSG configuration of the IQ modulator 200. In Fig. 3(a), a path of a pair of a first wire and a second wire of a set of four wires is shown by one line and a path of a pair of a third wire and a fourth wire is shown by another line. The path of the pair of the first wire and the second wire appears to overlap substantially equally in top view and the path of the pair of the third wire and the fourth wire appears to overlap substantially equally in top view. On the other hand, the paths of the pair of the first wire and the third wire (or the pair of the second wire and the fourth wire) are different in top view.

Fig. 3(b) is a diagram schematically showing a wire viewed from the side of the connecting portion between the driver IC 300 and the IQ modulator 200. As shown in Fig. 3(b), the PAD portion of the driver IC 300 is installed at a position higher than the position in which the PAD portion 106 of the IQ modulator 200 is formed. In Fig. 3(b), of the set of four wires used for connecting one Signal PAD in the GSGSG configuration of the driver IC 300 and one Signal PAD in the GSSG configuration of the IQ modulator 200, different paths of the pair of the first wire and the second wire (or the pair of the third wire and the fourth wire) are indicated by two lines. In Fig. 3(b), wires connecting between the GND PADs of the GSGSG configuration of the driver IC 300 and the GND PAD of the GSSG configuration of the IQ modulator 200 are omitted. The first wire (or third wire) is wired by joining a ball formed by melting the distal end of the wire onto one Signal PAD of the GSSG configuration of the modulator, then, after pulling the other distal end of wire upward (in the z-axis direction), joining a ball formed by melting the other distal end of the wire onto one Signal PAD of the GSGSG configuration of the driver IC 300. The second wire (or fourth wire) is wired by joining a ball formed by melting the distal end of the wire to be overlapped the ball of the first wire joined to the one Signal PAD of the GSSG configuration of the IQ modulator 200, then, after pulling the other distal end of wire upward (in the z-axis direction), joining the ball formed by melting the other distal end of the wire to be overlapped the ball of the first wire joined to the Signal PAD of the GSGSG configuration of the driver IC 300. The length of the second wire (or fourth wire) is longer than the length of the first wire (or third wire). Therefore, the pair of the first wire and the second wire (or the pair of the third wire and the fourth wire) have different paths in side view. The pair of the first wire and the third wire (or the pair of the second wire and the fourth wire) appear to overlap with substantially equal paths in side view.

Fig 3(c) is a diagram schematically showing a cross-sectional structure of the PAD portion 106 of the IQ modulator 200. As shown in Fig. 3(c), the PAD portion 106 of the IQ modulator 200 is formed on a BCB layer 303 formed of BCB, which is a low dielectric material, on a semiconductor substrate 301. BCB is an example of a low dielectric material and materials other than BCB may be used for forming the low dielectric layer. Two arm waveguides 104 of the child MZM formed on the semiconductor substrate 301 are embedded in the BCB layer 303. As described above, the Signal PAD and GND PAD in the GSSG configuration or GSGSG configuration are arranged at positions in which it and the arm waveguide 104 do not overlap.

In the SS line configuration without GND, the electromagnetic field distribution tends to spread in the wire, which is the high-frequency connection part, and it is likely to cause deterioration of high-frequency characteristics such as deterioration of crosstalk and increase of high-frequency loss. The high-frequency characteristics can be improved and stabilized by disposing the GND PAD in the PAD portion 106 of the IQ modulator 200 and connecting it to the GND PAD of the driver IC 300 as in the present disclosure.

### [Industrial Applicability]

It is possible to provide a driver integrated IQ optical modulator capable of improving high-frequency characteristics in a simple SS line configuration.

## Claims

1. A driver integrated IQ optical modulator, comprising:
an IQ modulator (200) comprising at least two or more Mach-Zehnder modulators; and
a differential driver IC (300) connected to the IQ modulator,
wherein each of the at least two or more Mach-Zehnder modulators comprises a differential transmission line (105),
the differential transmission line comprises two signal lines for transmitting high-frequency modulated signals including differential signals,
the differential transmission line includes a PAD portion (106) for connection with another element, a lead line portion (107), a phase modulation portion (108), and a termination portion (109), and the other element includes the differential driver IC,
the PAD portion includes a set of four first metal PADs having a GSSG configuration or a set of five first metal PADs having a GSGSG configuration, in which G is Ground and S is Signal, and
the lead line portion, the phase modulation portion, and the termination portion have an SS line configuration,
wherein the differential driver IC includes a set of four second metal PADs with a GSSG configuration or a set of five second metal PADs with a GSGSG configuration, and
the set of four second metal PADs or the set of five second metal PADs are connected by wires to the corresponding set of four first metal PADs or the set of five first metal PADs,
wherein a wire connecting the second metal PAD provided in the differential driver IC and the first metal PAD provided in the IQ modulator is configured through ball bonding,
each configuration between the first metal PAD and the second metal PAD associated with Signal in the GSSG configuration or the GSGSG configuration is connected to a set of four wires,
a pair of a first wire and a second wire of the set of four wires has substantially the same path in top view and different paths in side view,
a pair of a third wire and a fourth wire in the set of four wires has substantially the same path in top view and different paths in side view, and
a pair of the first wire and the third wire of the set of four wires has different paths in top view and substantially the same path in side view.

2. The driver integrated IQ optical modulator according to claim 1,
wherein, in at least one of the set of the second metal PADs provided in the differential driver IC and the set of the first metal PADs provided in the IQ modulator,
a wire is connected between the first metal PADs or between the second metal PADs related to Ground in the GSSG configuration or the GSGSG configuration, and
the wire connecting between the first metal PAD or between the second metal PAD associated with the Ground is configured to surround a wire connecting between the first metal PAD and the second metal PAD associated with Signal of the GSSG configuration or the GSGSG configuration.

3. The driver integrated IQ optical modulator according to claim 1 or 2, wherein the first metal PAD associated with Ground closest to the periphery of the IQ modulator of the set of the first metal PADs having the GSSG configuration provided in the IQ modulator or the set of the first metal PADs having the GSGSG configuration is connected to an external ground potential.

4. The driver integrated IQ optical modulator according to any one of claims 1 to 3, wherein each of the at least two or more Mach-Zehnder modulators includes the phase modulation portion having a capacitance loading structure, and the impedance of the capacitance loading structure is 3% or more higher than the impedance of a terminal resistor provided in the termination portion.

5. The driver integrated IQ optical modulator according to any one of claims 1 to 3, wherein the set of the second metal PADs provided in the differential driver IC is installed at a higher position than the set of the first metal PADs provided in the IQ modulator.

6. The driver integrated IQ optical modulator according to any one of claims 1 to 5, wherein the Mach-Zehnder modulator includes a semiconductor substrate, a waveguide structure formed on the semiconductor substrate, and a layer formed on the semiconductor substrate using a low dielectric material to embed the waveguide structure, and
the set of first metal PADs is formed on a layer formed using the low dielectric material.

## Patentansprüche

1. Optischer IQ-Modulator mit integriertem Treiber, der aufweist:
einen IQ-Modulator (200), der zumindest zwei oder mehr Mach-Zehnder-Modulatoren aufweist; und
einen differentiellen Treiber-IC (300), der mit dem IQ-Modulator verbunden ist,
wobei jeder der zumindest zwei oder mehr Mach-Zehnder-Modulatoren eine differentielle Übertragungsleitung (105) aufweist,
die differentielle Übertragungsleitung zwei Signalleitungen zum Übertragen von hochfrequenzmodulierten Signalen einschließlich differentiellen Signalen aufweist,
die differenzielle Übertragungsleitung einen PAD-Anteil (106) zum Verbinden mit einem anderen Element, einen Führungsleitungsabschnitt (107), einen Phasenmodulationsabschnitt (108) und einen Abschlussabschnitt (109) enthält, und das andere Element den differentiellen Treiber-IC enthält,
der PAD-Anteil einen Satz von vier ersten Metall-PADs, die eine GSSG-Konfiguration aufweisen, oder einen Satz von fünf ersten Metall-PADs, die eine GSGSG-Konfiguration aufweisen, enthält, in dem G eine Masse ist und S ein Signal ist, und
der Führungsleitungsanteil, der Phasenmodulationsanteil und der Abschlussanteil eine SS-Leitungskonfiguration aufweisen,
wobei der differentielle Treiber-IC einen Satz von vier zweiten Metall-PADs mit einer GSSG-Konfiguration oder einen Satz von fünf zweiten Metall-PADs mit einer GSGSG-Konfiguration enthält, und
der Satz von vier zweiten Metall-PADs oder der Satz von fünf zweiten Metall-PADs mit Drähten mit dem entsprechenden Satz von vier ersten Metall-PADs oder dem Satz von fünf ersten Metall-PADs verbunden ist,
wobei ein Draht, der das zweite Metall-PAD, das in dem differentiellen Treiber-IC bereitgestellt ist, und das erste Metall-PAD, das in dem IQ-Modulator bereitgestellt ist, verbindet, durch einen Kugelverbund konfiguriert ist,
jede Konfiguration zwischen dem ersten Metall-PAD und dem zweiten Metall-PAD, die mit einem Signal in der GSSG-Konfiguration oder der GSGSG-Konfiguration assoziiert ist, mit einem Satz von vier Drähten verbunden ist,
ein Paar eines ersten Drahtes und eines zweiten Drahtes des Satzes von vier Drähten im Wesentlichen den gleichen Pfad in einer Draufsicht und verschiedene Pfade in einer Seitenansicht hat,
ein Paar eines dritten Drahtes und eines vierten Drahtes in dem Satz von vier Drähten im Wesentlichen den gleichen Pfad in einer Draufsicht und verschiedene Pfade in einer Seitenansicht hat, und
ein Paar aus dem ersten Draht und dem dritten Draht aus dem Satz von vier Drähten verschiedene Pfade in einer Draufsicht und im Wesentlichen den gleichen Pfad in einer Seitenansicht hat.

2. Optischer IQ-Modulator mit integriertem Treiber nach Anspruch 1, wobei in zumindest einem aus dem Satz der zweiten Metall-PADs, die in dem differentiellen Treiber-IC bereitgestellt sind, und dem Satz der ersten Metall-PADs, die in dem IQ-Modulator bereitgestellt sind:
ein Draht zwischen den ersten Metall-PADs oder zwischen den zweiten Metall-PADs bezogen auf eine Masse in der GSSG-Konfiguration oder der GSGSG-Konfiguration verbunden ist, und
der Draht, der zwischen dem ersten Metall-PAD oder zwischen dem zweiten Metall-PAD verbunden ist, und mit der Masse assoziiert ist, konfiguriert ist, einen Draht, der zwischen dem ersten Metall-PAD und dem zweiten Metall-PAD verbindet und mit einem Signal der GSSG-Konfiguration oder der GSGSG-Konfiguration assoziiert ist, zu umgeben.

3. Optischer IQ-Modulator mit integriertem Treiber nach Anspruch 1 oder 2, wobei das erste Metall-PAD, das mit der Masse assoziiert ist, und der Peripherie des IQ-Modulators aus dem Satz von ersten Metall-PADs, die eine GSSG-Konfiguration haben, die in dem IQ-Modulator bereitgestellt ist, oder aus dem Satz von ersten Metall-PADs, die die GSGSG-Konfiguration haben, am nächsten zu der Peripherie des IQ-Modulators ist, mit einem externen Massepotenzial verbunden ist.

4. Optischer IQ-Modulator mit integriertem Treiber nach einem der Ansprüche 1 bis 3, wobei jeder der zumindest zwei oder mehr Mach-Zehnder-Modulatoren den Phasenmodulationsanteil, der eine Kapazitätsladestruktur aufweist, enthält, und die Impedanz der Kapazitätsladestruktur 3% oder mehr größer als die Impedanz eines Abschlusswiderstands, der in dem Abschlussanteil bereitgestellt ist, ist.

5. Optischer IQ-Modulator mit integriertem Treiber nach einem der Ansprüche 1 bis 3, wobei der Satz der zweiten Metall-PADs, die in dem differentiellen Treiber-IC bereitgestellt sind, an einer höheren Position als der Satz der ersten Metall-PADs, die in dem IQ-Modulator bereitgestellt sind, installiert ist.

6. Optischer IQ-Modulator mit integriertem Treiber nach einem der Ansprüche 1 bis 5, wobei der Mach-Zehnder-Modulator ein Halbleitersubstrat, eine Wellenleiterstruktur, die auf dem Halbleitersubstrat gebildet ist, und eine Schicht, die auf dem Halbleitersubstrat unter Verwendung eines Materials mit niedriger Dielektrizität um die Wellenleiterstruktur einzubetten, enthält, und
der Satz von ersten Metall-PADs auf einer Schicht, die unter Verwendung des Materials niedriger Dielektrizität gebildet ist, gebildet ist.

## Revendications

1. Modulateur optique IQ intégré à un pilote, comprenant :
un modulateur IQ (200) comprenant au moins deux modulateurs Mach-Zehnder ou plus ; et
un CI pilote différentiel (300) connecté au modulateur IQ,
chacun des au moins deux modulateurs Mach-Zehnder ou plus comprenant une ligne de transmission différentielle (105),
la ligne de transmission différentielle comprenant deux lignes de signaux pour l'émission de signaux modulés haute fréquence comportant des signaux différentiels,
la ligne de transmission différentielle comprenant une section PAD (106) destinée à être connectée à un autre élément, une section de ligne conductrice (107), une section de modulation de phase (108) et une section de terminaison (109), et l'autre élément comprenant le CI pilote différentiel,
la section PAD comprenant un ensemble de quatre premiers PADs métalliques présentant une configuration GSSG ou un ensemble de cinq premiers PADs métalliques présentant une configuration GSGSG, dans laquelle G est la masse et S est le signal, et
la section de ligne conductrice, la section de modulation de phase et la section de terminaison ayant une configuration de ligne SS,
le CI pilote différentiel comprenant un ensemble de quatre deuxièmes PADs métalliques avec une configuration GSSG ou un ensemble de cinq deuxièmes PADs métalliques avec une configuration GSGSG, et
l'ensemble de quatre deuxièmes PADs métalliques ou l'ensemble de cinq deuxièmes PADs métalliques étant connectés par des fils à l'ensemble correspondant de quatre premiers PADs métalliques ou l'ensemble de cinq premiers PADs métalliques,
un fil de connexion du deuxième PAD métallique prévu dans le CI pilote différentiel et le premier PAD métallique prévu dans le modulateur IQ étant configuré par liaison à bille,
chaque configuration entre le premier PAD métallique et le deuxième PAD métallique associé à un signal selon la configuration GSSG ou la configuration GSGSG étant connectée à un ensemble de quatre fils,
une paire d'un premier fil et d'un deuxième fil de l'ensemble de quatre fils ayant sensiblement le même chemin en vue de dessus et des chemins différents en vue de côté,
une paire d'un troisième fil et d'un quatrième fil dans l'ensemble de quatre fils ayant sensiblement le même chemin en vue de dessus et différents chemins en vue latérale, et
une paire du premier fil et du troisième fil de l'ensemble de quatre fils ayant des chemins différents en vue de dessus et sensiblement le même chemin en vue latérale.

2. Modulateur optique IQ intégré à un pilote selon la revendication 1, dans au moins l'un de l'ensemble des deuxièmes PADs métalliques prévus dans le CI pilote différentiel et de l'ensemble des premiers PADs métalliques prévus dans le modulateur IQ,
un fil étant connecté entre les premiers PADs métalliques ou entre les deuxièmes PADs métalliques liés à la masse dans la configuration GSSG ou la configuration GSGSG, et
le fil de connexion entre le premier PAD métallique ou entre le deuxième PAD métallique associé à la masse étant configuré pour entourer un fil de connexion entre le premier PAD métallique et le deuxième PAD métallique associé au signal de la configuration GSSG ou de la configuration GSGSG.

3. Modulateur optique IQ intégré à un pilote selon la revendication 1 ou 2, le premier PAD métallique associé à la masse la plus proche de la périphérie du modulateur IQ de l'ensemble de premiers PADs métalliques ayant la configuration GSSG prévue dans le modulateur IQ ou l'ensemble des premiers PADs métalliques ayant la configuration GSGSG étant connecté à un potentiel de masse externe.

4. Modulateur optique IQ intégré à un pilote selon l'une quelconque des revendications 1 à 3, chacun des au moins deux modulateurs de Mach-Zehnder ou plus comprenant la section de modulation de phase ayant une structure de charge capacitive, et l'impédance de la structure de charge capacitive étant supérieure de 3 % ou plus à l'impédance d'une résistance terminale prévue dans la section de terminaison.

5. Modulateur optique IQ intégré à un pilote selon l'une quelconque des revendications 1 à 3, l'ensemble des deuxièmes PADs métalliques prévus dans le CI pilote différentiel étant installé à une position plus élevée que l'ensemble des premiers PADs métalliques prévus dans le modulateur IQ.

6. Modulateur optique IQ intégré à un pilote selon l'une quelconque des revendications 1 à 5, le modulateur de Mach-Zehnder comprenant un substrat semi-conducteur, une structure de guide d'ondes formée sur le substrat semi-conducteur, et une couche formée sur le substrat semi-conducteur en utilisant un matériau à faible constante diélectrique pour intégrer la structure de guide d'ondes, et
l'ensemble de premiers PADs métalliques étant formé sur une couche formée à l'aide du matériau à faible constante diélectrique.
